# EUROPÄISCHE PATENTSCHRIFT

(11) **EP 1 648 768 B1**
(45) Veröffentlichungstag und Bekanntmachung des Hinweises auf die Patenterteilung: **10.09.2008**
(21) Anmeldenummer: 04763420.9
(22) Anmeldetag: 23.07.2004
(51) Int. Cl.: B64D 11/06, B60N 2/00, G06K 19/067, G06K 7/015

(54) **SITZ MIT DATENSPEICHER, INSBESONDERE FLUGGASTSITZ, UND ZUGEHÖRIGES LESEGERÄT**
SEAT, ESPECIALLY AN AIRCRAFT PASSENGER SEAT, WITH A DATA STORAGE DEVICE AND ASSOCIATED READING DEVICE
SIEGE COMPORTANT UNE MEMOIRE DE DONNEES, EN PARTICULIER SIEGE POUR PASSAGER AERIEN, ET LECTEUR CORRESPONDANT

(30) Priorität: 29.07.2003 DE 10334462
(43) Veröffentlichungstag der Anmeldung: 26.04.2006
(73) Patentinhaber: Recaro Aircraft Seating GmbH & Co. KG, 74523 Schwäbisch Hall (DE)
(72) Erfinder: TERNO, Antje, 74544 Michelbach (DE); SCHREMPP, Christoph, 74541 Vellberg (DE)
(74) Vertreter: Daub, Thomas
(86) Internationale Anmeldenummer: PCT/EP2004/008228
(87) Internationale Veröffentlichungsnummer: WO 2005/011439

(56) Entgegenhaltungen:
- EP-A- 1 462 349
- WO-A1-97/22297
- DE-A- 19 840 785
- DE-A1- 19 836 969
- US-A- 6 107 920
- US-A1- 2002 080 032
- US-B1- 6 412 813
- US-B1- 6 561 580
- [Online] XP002304960 "Federal Aviation Regulation Sec 23.1301" INTERNET ARTICLE Gefunden im Internet: URL:http://www.airweb.faa.gov/Regulatory_a nd_Guidance_Library/rgFAR.nsf/0/E6B97FEAE6 681A3E85256687007048B0?OpenDocument>

## Beschreibung

Die Erfindung betrifft einen Sitz, insbesondere Fahrzeugsitz, vorzugsweise Fluggastsitz, gemäß dem Oberbegriff des Anspruchs 1 sowie ein System aufweisend einen solchen Sitz und ein zugehöriges Lesegerät zur Datenübertragung mit einem Datenspeicher des Sitzes.

Für besondere Anwendungsgebiete werden an Sitze erhöhte Anforderungen hinsichtlich bestimmter Eigenschaften gestellt, beispielsweise hinsichtlich der mechanischen Festigkeit, Feuerfestigkeit oder dergleichen. Dies betrifft insbesondere Fahrzeugsitze und vor allem Fluggastsitze, bei denen der Sitz insgesamt oder einzelne Sitzkomponenten vorgegebene Zulassungsvorschriften erfüllen müssen und dementsprechend zertifiziert sind. Die Hersteller derartiger Sitze garantieren das Erfüllen der Anforderungen und müssen dies für einen vorgebbaren Zeitraum gewährleisten. Nicht selten kommt es aufgrund unterschiedlicher Anlässe zu Modifikationen an einem Sitz oder auch nur einzelnen Sitzkomponenten, beispielsweise zu einer Veränderung des Einsatzortes, der Einsatzart oder der Einsatzhäufigkeit oder zum Austausch von Sitzkomponenten aufgrund von Beschädigung oder Verschleiß.

Bisher gibt es keine Möglichkeit derartige, hinsichtlich der Lebensdauer und/oder der Zertifizierung des jeweiligen Sitzes und/oder einzelner Sitzkomponenten relevante Daten verläßlich zu erfassen. Dementsprechend stehen keine effektiven, in der Praxis ermittelten Werte beispielsweise für die MTBF (Mean Time Between Failures) zur Verfügung. Außerdem können nicht-zertifizierte und daher unerlaubte Austauschteile bisher nicht in jedem Fall zuverlässig identifiziert werden.

Aus der DE 199 50 554 A1 ist ein Verfahren zum Betreiben eines Produktinformationssystems zur Verwaltung produktspezifischer Informationen sowie ein entsprechendes System bekannt, wobei insbesondere Produktions-, Transport- und Lagerdaten vom Hersteller bis zum Händler auf einem Transponder mit einer Speichereinrichtung und einer Energiequelle gespeichert werden, und der Transponder in Form von Aufklebern oder kartenförmigen Etiketten ausgebildet ist.

Die DE 101 47 043 A1 zeigt ein Verfahren zur Erfassung von Daten für die Lokalisation und Inventarisierung von Möbelstücken in einem Gebäude. Das Gebäude ist nach Stockwerken sowie nach Räumen in den Stockwerken katalogisiert und dadurch ist ein Katalog von einzelnen Lokalitäten gebildet. An den Möbelstücken sind Codeträger angeordnet, welche eine Angabe über die spezifische Lokalität des betreffenden Möbelstücks in dem Gebäude enthalten. Die Daten des Katalogs der einzelnen Lokalitäten und die Angaben über die spezifische Lokalität der Möbelstücke werden in einer elektronischen Datenbank als Raumbuch gespeichert.

Aus der DE 101 45 498 A1 ist ein mobiles Lesegerät zum Auslesen von Informationen betreffend die Bearbeitung von Siliziumscheiben aus einem

Transponder bekannt, wobei der Transponder an einem Transportbehältnis für die Siliziumscheiben angeordnet ist.

Aus der US 6,412,813 B1 ist ein Sitz nach dem Oberbegriff des Anspruchs 1 bekannt, der einen Datenspeicher aufweist.

Der Erfindung liegt daher die Aufgabe zugrunde, einen Sitz bereitzustellen, welcher die Nachteile des Standes der Technik überwindet. Insbesondere sollen der Sitz und/oder die einzelnen Sitzkomponenten dauerhaft eindeutig identifizierbar sein und die für die Lebensdauer und/oder für die Zertifizierung relevanten Daten zuverlässig und dauerhaft protokollierbar und anhand eines zugehörigen Lesegeräts bequem auslesbar sein.

Diese Aufgabe ist durch den im Anspruch 1 bestimmten Sitz und durch das im nebengeordneten Anspruch bestimmte System gelöst. Besondere Ausführungsarten der Erfindung sind in den Unteransprüchen bestimmt.

Die Aufgabe ist bei einem Sitz, insbesondere einem Fahrzeugsitz, und vorzugsweise einem Fluggastsitz, mit mindestens einer Sitzkomponente, wie beispielsweise einem Sitzteil, einer Rückenlehne oder einer Armlehne, wobei der Sitz im Auslieferungszustand vorgegebene Zulassungsschriften erfüllt und dementsprechend zertifziert ist, wobei an mindestens einer Sitzkomponente ein Datenspeicher fest angeordnet ist, der von einem externen Lesegerät elektronisch auslesbar ist, dadurch gelöst, daß in dem Datenspeicher individuelle, hinsichtlich der Lebensdauer oder der Zertifizierung des jeweiligen Sitzes und/oder einzelner Sitzkomponenten relevante Daten, gespeichert sind, daß der Datenspeicher einen Nur-Lese-Speicherbereich aufweist, in den im Auslieferungszustand des Sitzes bereits Daten werkseitig eingespeichert sind, und daß der Datenspeicher einen Schreib- und- Lese-Speicherbereich weist, in den während der Lebensdauer des Sitzes Daten einschreibbar und auslesbar sind.

Der Datenspeicher ist vorzugsweise als Halbleiterplättchen oder Chip ausgeführt und kann beispielsweise periphere Schaltkreise zum Empfangen und Senden sowie zum Einschreiben und Auslesen von Daten aufweisen. In Frage kommen beispielsweise auch Schaltungsanordnungen, wie sie als

SIM-Karten (Subscriber Identify Module), SIMM-Karten (Single Inline Memory Module) oder DIMM-Karten (Dual Inline Memory Module) auf dem Markt für andere Anwendungszwecke erhältlich sind. Die Daten werden vorzugsweise digital gespeichert, und der Datenspeicher kann eine individuell für den Sitz geltende Lebenslaufkarte oder Lebensdauerkarte realisieren. Die Daten sind nicht-flüchtig gespeichert, das heißt auch nach einem Abschalten der Energieversorgung bleiben die Daten erhalten.

Die Anordnung des Datenspeichers oder einer dem Datenspeicher zugeordneten Empfangseinheit an dem Sitz ist vorzugsweise so gewählt, daß mit einem vorzugsweise externen und insbesondere mobilen Lesegerät eine Datenübertragung einfach herstellbar ist. Alternativ oder ergänzend zu einem mobilen Lesegerät kommt auch eine Festverdrahtung des Sitzes bzw. des zugehörigen Datenspeichers in Betracht, beispielsweise ein Anschluß des Datenspeichers an eine Sammelleitung oder einen Datenbus, an den auch die Datenspeicher weiterer Sitze angeschlossen sind. Das externe Lesegerät kann in diesem Fall ebenfalls mit dem Datenbus verbunden sein und über individuelle, dem jeweiligen Sitz zugeordnete Speicheradressen parallel oder sequentiell die Datenspeicher einzelner Sitze ansprechen. Vorzugsweise ist der Datenspeicher bereits werkseitig praktisch unlösbar an dem Sitz bzw. an der Sitzkomponente festgelegt oder jedenfalls gegen unbefugten Austausch gesichert.

Der Datenspeicher weist einen Nur-Lese-Speicherbereich auf, in den im Auslieferungszustand des Sitzes bereits Daten werkseitig eingespeichert sind. In diesen Speicherbereich sind später, d.h. nach der Auslieferung des Sitzes, keine Daten hinzufügbar. Für diesen Nur-Lese-Speicherbereich kann entweder ein separater Halbleiterchip vorgesehen sein, oder es können auf einem gemeinsamen Halbleiterchip bestimmte Speicheradressbereiche hardwaretechnisch oder softwaretechnisch als Nur-Lese-Speicher reserviert sein. Typische Beispiele für Daten dieses Nur-Lese-Speicherbereiches sind Artikelnummer, Seriennummer, Stücklistendatum, Zulassungsvorschrift, Erstkunde, Ersteinbau usw.. Mindestens ein Teil dieser Daten kann auch in einer einzigartigen, unveränderbaren und elektronisch auslesbaren Identifikationsnummer zusammengefaßt sein.

Der Datenspeicher weist weiterhin einen Schreib-und-Lese-Speicherbereich auf, in den während der Lebensdauer des Sitzes Daten einschreibbar und auslesbar sind. Das Auslesen und Einschreiben von Daten kann insbesondere diskontinuierlich erfolgen, beispielsweise anläßlich von Wartungsarbeiten, die regelmäßig nach einer vorgebbaren Anzahl von Betriebsstunden durchgeführt werden. Einmal eingeschriebene Daten können aus dem Datenspeicher nicht wieder entfernt werden, insbesondere sind einmal eingeschriebene Daten nicht-löschbar und nicht-überschreibbar. Damit ist gewährleistet, daß im Nachhinein einmal eingeschriebene Daten nicht mehr manipuliert werden können. Dies kann durch softwaretechnische Maßnahmen erfolgen, beispielsweise indem jede Speicheradresse nur einmal zum Einschreiben verwendbar ist und anschließend verbraucht ist, oder durch hardwaretechnische Maßnahmen, beispielsweise indem beim Einschreiben irreversible Speichervorgänge erfolgen, etwa durch Aufschmelzen von Verbindungsleitungen.

Typische Beispiele für Daten, die in den Schreib-und-Lese-Speicherbereich eingeschrieben werden, sind das Ersteinbaudatum, das Fahrzeug und der Betreiber des Fahrzeugs, bei einem Fluggastsitz insbesondere der Flugzeugtyp und die Flugzeugidentifikation sowie die Airline, die Position des Sitzes innerhalb des Fahrzeuges, durchgeführte Reparaturen, vorgenommene Modifikation an dem Sitz, Wartungsarbeiten, Werkstattaufenthalte usw.. Jede Dateneingabe kann mit einem unveränderlichen Datumstempel versehen sein.

Grundsätzlich kann die Datenübertragung zwischen Lesegerät und Datenspeicher konventionell erfolgen, insbesondere drahtgebunden, beispielsweise über eine definierte oder sogar standardisierte Schnittstelle. In einer besonderen Ausführungsart der Erfindung erfolgt die Datenübertragung zwischen dem Datenspeicher und dem Lesegerät drahtlos. Insbesondere sind die Daten drahtlos aus dem Datenspeicher auslesbar und drahtlos in den Datenspeicher einschreibbar. Die drahtlose Datenübertragung kann auch im Falle eines Fluggastsitzes unter Berücksichtigung der dort geltenden erhöhten Sicherheitsvorschriften mittels elektromagnetischer Wellen erfolgen, beispielsweise auch mittels optischer Signalübertragung, gegebenenfalls auch mittels einer in den Sitz einsteckbaren Glasfaser.

Vorzugsweise arbeitet der Datenspeicher nach dem Transponderprinzip und ist erst nach einer entsprechenden und gegebenenfalls durch Codewörter gesicherten Stimulation des Lesegerätes zur Datenübertragung bereit. Es ist beispielsweise möglich, daß die Daten aus dem Datenspeicher dadurch auslesbar sind, daß der Datenspeicher oder eine zugeordnete Empfangseinheit ein von dem Lesegerät ausgesandtes Signal entsprechend den gespeicherten Daten modifiziert und quasi moduliert, beispielsweise durch Schwächung des elektromagnetischen Feldes entsprechend den gespeicherten Daten. Das Lesegerät weist eine Empfangseinheit auf, welche das modifizierte Signal empfängt und quasi demoduliert, und dadurch die Daten des Datenspeichers extrahiert. Grundsätzlich sind bei dieser Datenübertragung alle bekannten Verfahren zur Modulation einsetzbar, insbesondere eine Amplitudenmodulation.

In einer besonderen Ausführungsart der Erfindung ist die für den Betrieb des Datenspeichers erforderliche Energie von dem Lesegerät auf den Datenspeicher oder auf eine dem Datenspeicher zugeordnete mit dem Datenspeicher verbundene Empfangseinheit übertragbar. Vorzugsweise erfolgt die Energieübertragung kontaktlos, beispielsweise durch intensive Lichteinstrahlung, gegebenenfalls im Infrarotbereich, durch Bereitstellung eines lokal ausreichend starken elektromagnetischen Feldes oder dergleichen.

Vorzugsweise ist an dem Sitz im Bereich des Datenspeichers eine Einrichtung zum Positionieren des Lesegerätes vorgesehen, insbesondere eine mit zugeordneten Positionierungsmitteln am Lesegerät zusammenwirkende Rasteinrichtung. Das Positionieren des Lesegeräts, oder insbesondere eines zugehörigen Lesekopfes des Lesegerätes, kann beispielsweise auf einfache Weise anhand einer Steckverbindung erfolgen, durch die neben einer mechanischen Positionierung gegebenenfalls auch eine kontaktbehaftete elektrische Verbindung herstellbar ist. Bei eingestecktem Lesekopf bzw. Lesegerät ist die Datenübertragung gewährleistet, unabhängig davon ob diese drahtgebunden oder drahtlos erfolgt. Eine Positionierung des Lesegeräts ist aber nicht unbedingt erforderlich; so kann auch lediglich durch Annähern oder Überstreichen des Lesegeräts an den Datenspeicher oder eine dem Datenspeicher zugeordnete Empfangseinheit eine Signalübertragung möglich sein, etwa wie bei einem Magnetstreifen-Lesegerät.

Vorzugsweise weist die Positionierungseinrichtung einen Magneten auf, durch den das Lesegerät in eine vorgebbare Position in Bezug auf den Datenspeicher bringbar ist. Eine solche, auf Magnetkraft beruhende Positionierungseinrichtung kann auch so ausgestaltet sein, daß sie von außen an dem Sitz im wesentlichen unsichtbar bleibt. Dadurch ist einer unbeabsichtigten oder beabsichtigten Manipulation der Schnittstelle zwischen Lesegerät und Datenspeicher wirksam vorgebeugt. Die das Lesegerät bedienende Person muß hinsichtlich der Position des Datenspeichers oder der zugehörigen Empfangseinheit instruiert werden, gegebenenfalls unter Verwendung einer unauffälligen Markierung an dem Sitz.

Das erfindungsgemäße System weist ein Lesegerät mit Datenübertragungsmitteln auf zum Auslesen der individuellen, hinsichtlich der Lebensdauer oder der Zertifizierung des jeweiligen Sitzes und/oder einzelner Sitzkomponenten relevanten Daten, sowie Speichermittel zum Zwischenspeichern der aus dem Datenspeicher ausgelesenen und/oder der in den Datenspeicher einzuschreibenden Daten. Vorzugsweise handelt es sich bei dem Lesegerät um eine tragbare und batteriegespeiste Einrichtung. Für viele Anwendungsfälle wird es vorteilhaft sein, wenn mit dem eigentlichen Lesegerät ein miniaturisierter Lesekopf verbunden ist, im einfachsten Fall ein Stecker, für die eigentliche Verbindung mit dem Datenspeicher. Die Verbindung zwischen Lesegerät und Lesekopf kann dabei drahtgebunden oder auch drahtlos erfolgen.

In einer besonderen Ausführungsart weist das Lesegerät auch eine Anzeigeeinrichtung auf zum Anzeigen der aus dem Datenspeicher ausgelesenen und/oder der in den Datenspeicher einzuschreibenden Daten. Dadurch kann beispielsweise unmittelbar vor Ort eine Plausibilitätsprüfung der Daten stattfinden, gegebenenfalls auch unter Verwendung von entsprechenden Prüfdaten, die in dem Lesegerät gespeichert sind. Außerdem können Daten wie beispielsweise der genaue Einbauort eines Fluggastsitzes innerhalb eines Flugzeuges aus dem Datenspeicher ausgelesen und unmittelbar vor Ort kontrolliert werden, oder in das Lesegerät eingegeben und anschließend auf den Datenspeicher übertragen werden.

Vorzugsweise weist das Lesegerät Positionierungsmittel auf zum Positionieren in Bezug auf den Datenspeicher zum Zwecke der fehlerfreien Datenübertragung und gegebenenfalls auch der Energieübertragung.
Die Positionierungsmittel können auch durch die Form eines mit einem Grundkörper des Lesegeräts verbundenen Lesekopf selbst realisiert sein, der beispielsweise in der Art eines Schlüssel-Schloß-Prinzips in eine am Sitz vorgesehene Buchse einsteckbar ist. Wie bereits vorstehend im Zusammenhang mit dem Sitz beschrieben kann es sich bei den Positionierungsmitteln um mechanische Positionierungsmittel handeln, gegebenenfalls unter Verwendung einer federkraftbelasteten Rasteinrichtung, oder um magnetkraftunterstützte Positionierungsmittel.

Vorzugsweise sind die im Lesegerät zwischengespeicherten Daten unter Verwendung von standardisierten Schnittstellen auf einen weiterverarbeitenden Rechner übertragbar. Hierzu kann das Lesegerät an einen PC (Personal Computer) anschließbar sein, beispielsweise über eine Infrarotschnittstelle, Bluetooth-Schnittstelle oder eine fire-wire-Schnittstelle. Alternativ oder ergänzend kann das Lesegerät selbst und/oder der weiterverarbeitende Rechner auch über ein Datennetz, beispielsweise das Internet, mit entfernten Rechenanlagen, Datenbanken, Bestell- oder Beratungszentren kommunizieren.

Ein erfindungsgemäß ausgestatteter Sitz ist eindeutig markiert und identifizierbar. Damit sind auch Ersatzteilfälschungen nachweisbar, wodurch insgesamt die Zuverlässigkeit des Sitzes erhöht ist. Insbesondere bei aufwendig ausgestatteten Komfortsitzen können gegebenenfalls auch temporär auftretende oder sich abzeichnenden Probleme in dem Datenspeicher protokolliert werden, beispielsweise ein ansteigender Strombedarf von Stellmotoren, der Rückschlüsse auf sich abzeichnende mechanische oder elektrische Probleme erlaubt. Die Auswertung der gespeicherten Daten erlaubt auch eine verbesserte Produktunterstützung bis hin zur vorsorglichen Ersatzteilbestellung. Langfristig ergeben sich dadurch auch erhebliche Vorteile auf seiten des Käufers und Anwenders derartiger Sitze aufgrund der verbesserten Kundenbetreuung und Produktqualität sowie der erhöhten Sicherheit.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben ist.
- Fig. 1: zeigt einen erfindungsgemäßen Fluggastsitz,
- Fig. 2: zeigt eine schematische perspektivische Ansicht eines Datenspeichers, und
- Fig. 3: zeigt eine perspektivische Ansicht eines zugehörigen Lesegerätes.

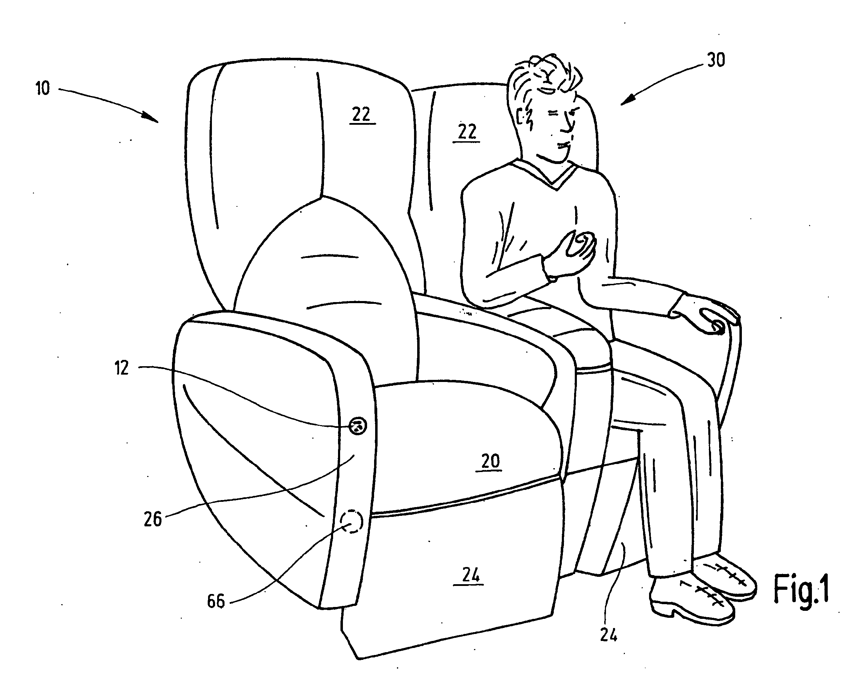

Die Fig. 1 zeigt einen Fluggastsitz 10 mit einem Sitzteil 20, einer Rückenlehne 22, einer Beinauflage 24 und einer Armlehne 26. Der unmittelbar neben dem Fluggastsitz 10 angeordnete weitere Fluggastsitz 30, auf dem ein Fluggast Platz genommen hat, ist identisch aufgebaut; die entsprechenden Sitzkomponenten sind mit identischen Bezugszeichen versehen. Solche Fluggastsitze 10, 30 finden sich beispielsweise in der Komfortklasse von Langstreckenflugzeugen. Grundsätzlich können derartige Sitze jedoch auch im Bereich von luxuriös ausgestatteten Reisebussen, Passagierschiffen einschließlich Fähren, medizinischen Einrichtungen, Wartesälen oder dergleichen Verwendung finden.

Insbesondere bei der Verwendung in einem Flugzeug müssen derartige Sitze erhöhte Sicherheitsanforderungen und damit verbundene Zulassungsvorschriften erfüllen und dementsprechend zertifiziert sein. Auch die einzelnen Sitzkomponenten müssen gegebenenfalls sogar unterschiedliche Zulassungsvorschriften erfüllen und insbesondere im Falle der Verwendung als Ersatzteil entsprechend zertifiziert sein.

Die dem Mittelgang zugewandte Armlehne 26 des Fluggastsitzes weist an ihrer Stirnseite eine dreipolige elektrische Steckbuchse 12 auf, die mit einem in der Armlehne 26 angeordneten und von außen nicht sichtbaren Datenspeicher elektrisch verbunden ist. Die Anordnung an der Armlehne 26 ist ebenso beispielhaft wie die Ausführung als dreipolige Steckbuchse; entsprechend kann die Koppelstelle mit dem Lesegerät auch alternativ oder ergänzend an einer anderen Sitzkomponente oder sonstigen geeigneten Stelle angeordnet sein, beispielsweise an einem Sitzteiler, einem Sitzfuß oder dergleichen; anstelle der Steckbuchse 12 kann jedes andere geeignete Element für den Signalaustausch vorgesehen sein. Der Datenspeicher ist ansonsten von außen nicht zugänglich und insbesondere bereits werkseitig in die Armlehne 26 integriert. In den Datenspeicher sind bereits werkseitig Daten eingespeichert, welche die Armlehne 26 oder den gesamten Fluggastsitz 10 individuell spezifizierenden. Das Einstecken eines Steckers des Lesegerätes in die Steckbuchse 12 kann mittels einer nicht dargestellten Halteklammer für die Dauer der Datenübertragung gesichert werden.

Der weitere Fluggastsitz 30 weist entweder an der entsprechenden Stelle ebenfalls eine eigene Steckbuchse auf, oder der Fluggastsitz 10 weist ebenfalls auf der dem Mittelgang zugewandte Armlehne 26 eine mit dem Datenspeicher des weiteren Fluggastsitzes 30 verbundene weitere Steckbuchse auf. Im letztgenannten Fall können bequem von der dem Mittelgang zugewandte Armlehne 26 die Daten beider Fluggastsitze 10, 30 ausgelesen werden. Alternativ oder ergänzend zu der Steckbuchse 12 können die Datenspeicher der Fluggastsitze 10, 30 auch mit einem Datenbus verbunden sein, an den alle Fluggastsitze des betreffenden Flugzeuges angeschlossen sind. Auf diese Weise können die Daten aller Fluggastsitze des Flugzeuges an einer zentralen Stelle ausgelesen werden.

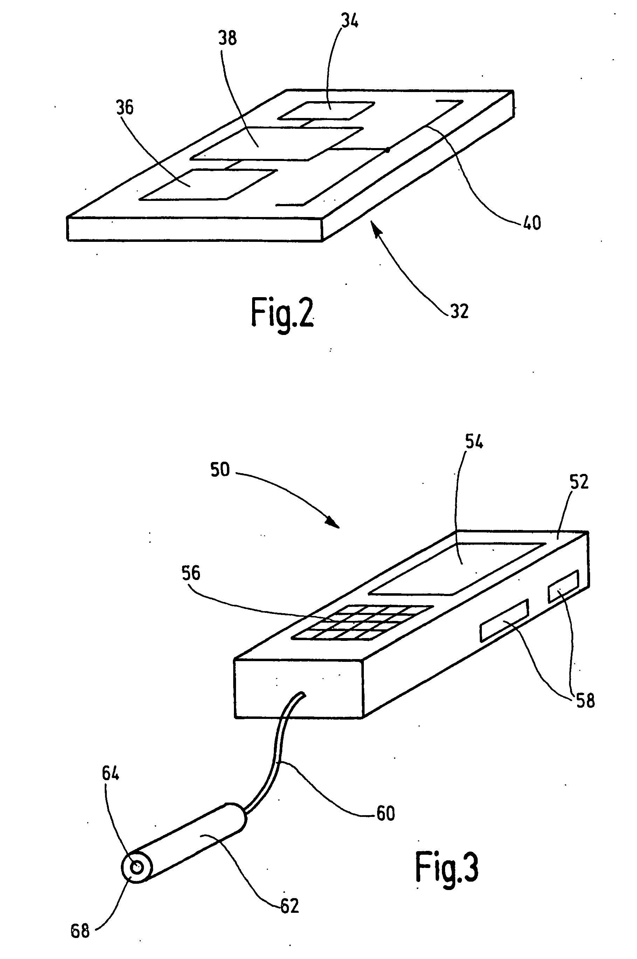

Die Fig. 2 zeigt eine schematische perspektivische Ansicht eines geeigneten Datenspeichers 32, der einen Nur-Lese-Speicherbereich 34 aufweist, der räumlich getrennt von einem Schreib-und-Lese-Speicherbereich 36 angeordnet ist. Außerdem kann der Datenspeicher 32 auf der Ober- oder Unterseite oder auf einer Stirnseite elektrische Kontaktflächen aufweisen. Der Datenspeicher 32 weist darüber hinaus eine zentrale Recheneinheit 38 auf, die auch für das Adressieren der Speicherplätze innerhalb der Speicherbereiche 34, 36, für den Betrieb der Schnittstelle zum Lesegerät, gegebenenfalls für die Übertragung an einen Datenbus und dergleichen zuständig ist. Für den Fall, daß die Datenübertragung drahtlos erfolgt und/oder der Datenspeicher 32 drahtlos von außerhalb mit elektrischer Energie versorgt werden muß, ist eine Antenne 40 vorgesehen.

In dem Nur-Lese-Speicherbereich 34 ist werkseitig und unveränderlich eine den Fluggastsitz 10 eindeutig identifizierende digitale Bitfolge einprogrammiert, die sich beispielsweise aus der Artikelnummer, der Seriennummer, der Anzahl und Art der Sitzkomponenten, der erfüllten Zulassungsvorschrift, der Zertifizierungsurkunde und dem geplanten Verwendungsort und Verwendungszweck zusammensetzt. Sofern der Datenspeicher 32 an einen zentralen Datenbus angeschlossen ist, können auch tatsächliche Belegungszeiten, Flugdauern, Anzahl der Starts und Landungen, und dergleichen anhand der in einem Zentral rechner des Flugzeugs verfügbaren Daten eingespeichert werden.

In den Schreib-und-Lese-Speicherbereich 36 können im Verlauf der Lebensdauer des Fluggastsitzes 10 weitere Informationen hinzugefügt werden, beispielsweise betreffend die Identifikation des Flugzeuges, in das der Fluggastsitz 10 eingebaut ist, den genauen Einbauort innerhalb des Flugzeuges, vorgenommene Wartung- und Reparaturarbeiten, Veränderungen an dem Fluggastsitz 10, und dergleichen. Auch das Einspeichern erfolgt dabei vorzugsweise anhand des Lesegerätes 50 (Fig. 3) im Rahmen von routinemäßigen oder außergewöhnlichen Wartungsarbeiten über die Steckbuchse 12, wobei einmal in den Speicherbereich 36 eingeschriebene Daten nicht gelöscht werden können und auch nicht überschrieben werden können.

Insbesondere durch die Daten des Schreib-und-Lese-Speicherbereiches 36 ist es möglich, lückenlos relevante Lebensdauerdaten oder Lebenslaufdaten betreffend den Fluggastsitz 10 zu protokollieren und für eine anschließende Auswertung verfügbar zu machen. Dadurch können auch verläßlichere Daten für relevante Parameter wie MTBF (Mean Time Between Failures), MTBUR (Mean Time Between Unscheduled Removal), DMC (Direct Maintenance Cost) und dergleichen ermittelt werden.

Die Fig. 3 zeigt eine perspektivische Ansicht eines zugehörigen Lesegerätes 50, das batteriebetrieben in einem Grundkörper 52 eine Anzeigeeinrichtung 54 und eine Eingabeeinrichtung 56, beispielsweise eine Tastatur oder ein sogenanntes touch-pad, aufweist, sowie Schnittstellen 58 zur Eingabe und Ausgabe von in den (in der Fig. 3 nicht sichtbaren) Datenspeicher 32 einzuschreibende bzw. aus dem Datenspeicher 32 auszulesende Daten. Alternativ oder ergänzend zu den Schnittstellen 58 kann das Lesegerät 60 auch austauschbare Speichermittel wie beispielsweise Halbleiter-Speicherkarten, Magnetspeicherkarten oder dergleichen aufweisen.

Mit dem Grundkörper 52 sind über eine Verbindungsleitung 60 Datenübertragungsmittel 62 verbunden, die beispielsweise aus einem zu der Steckbuchse 12 des Fluggastsitzes 10 passenden Stecker bestehen, und die im dargestellten Ausführungsbeispiel in einem im wesentlichen kreiszylindrischen Lesekopf angeordnet sind.

Der Lesekopf weist im Bereich seiner dem Datenspeicher 32 zuzuwendenden Kontaktseite, im vorliegenden Ausführungsbeispiel der Stirnseite 64, eine von außen nicht sichtbare Sende- und Empfangsantenne auf. Mittels der Sendeantenne kann der Lesekopf ein elektromagnetisches Feld aufbauen, das von dem Datenspeicher entsprechend der auszulesenden Daten durch entsprechende Bedämpfung abgeschwächt werden kann, wobei die auftretende Dämpfung wiederum von der Empfangsantenne des Lesekopfes ausgewertet und die auszulesenden Daten somit ermittelbar sind. Im Fall des Einschreibens von Daten in den Datenspeicher 32 wird auf das elektromagnetische Feld der Sendeantenne das einzuspeichernde Datensignal aufmoduliert, das von der zentralen Recheneinheit 38 des Datenspeichers 32 entsprechend demoduliert wird und in den Schreib-und-Lese-Speicherbereich 36 eingeschrieben wird.

Grundsätzlich kann die Steckbuchse 12 des Fluggastsitzes 10 so ausgestaltet sein, daß auch der Lesekopf alternativ oder ergänzend zu einem entsprechenden Stecker eingesteckt werden kann. Bevorzugt wird allerdings der Lesekopf nur in Anlage an oder in die Nähe eines hierfür vorgesehenen Koppelbereiches der Armlehne 26 gebracht, der in der Fig. 1 unterhalb der Steckbuchse 12 als Bestandteil der nachfolgend beschriebenen Positionierungseinrichtung 66 gestrichelt angedeutet ist. Eine Annäherung von einigen Zentimetern ist bereits ausreichend, um eine Datenübertragung zwischen dem Lesekopf und dem Datenspeicher 32 zu gewährleisten.

Dabei ist es möglich, den Koppelbereich durch die Wahl geeigneter, beispielsweise magnetisierbarer Werkstoffe als Positionierungseinrichtung 66 für das Lesegerät 50 bzw. den Lesekopf auszubilden. In diesem Fall kann der Lesekopf beispielsweise an seiner Stirnseite 64 als der Positionierungseinrichtung 66 zugeordnetes Positionierungsmittel 68 einen ringförmigen Elektromagneten oder Permanentmagneten aufweisen, bei dessen Aktivierung der Lesekopf nach Eintritt in einen Fangbereich der Positionierungseinrichtung 66 sich selbsttätig auf den Koppelbereich ausrichtet.

## Patentansprüche

1. Sitz, insbesondere Fahrzeugsitz, vorzugsweise Fluggastsitz (10, 30), mit mindestens einer Sitzkomponente, wie beispielsweise einem Sitzteil (20), einer Rückenlehne (22) oder einer Armlehne (26), wobei der Sitz im Auslieferungszustand vorgegebene Zulassungsvorschriften erfüllt und dementsprechend zertifiziert ist, wobei an mindestens einer Sitzkomponente ein Datenspeicher (32) fest angeordnet ist, der von einem externen Lesegerät (50) elektronisch auslesbar ist, **dadurch gekennzeichnet, daß** in dem Datenspeicher (32) individuelle, hinsichtlich der Lebensdauer oder der Zertifizierung des jeweiligen Sitzes und/oder einzelner Sitzkomponenten relevante Daten gespeichert sind, daß der Datenspeicher (32) einen Nur-Lese-Speicherbereich (34) aufweist, in den im Auslieferungszustand des Sitzes bereits Daten werkseitig eingespeichert sind, und daß der Datenspeicher (32) einen Schreib-und-Lese-Speicherbereich (36) aufweist, in den während der Lebensdauer des Sitzes Daten einschreibbar und auslesbar sind.

2. Sitz nach Anspruch 1, **dadurch gekennzeichnet, daß** die Daten in dem Datenspeicher (32) dauerhaft gespeichert sind, insbesondere nicht-löschbar und nicht-überschreibbar sind.

3. Sitz nach einem der Ansprüche 1 oder 2, **dadurch gekennzeichnet, daß** der Datenspeicher (32) eine einzigartige, unveränderbare und elektronisch auslesbare Identifikationsnummer besitzt.

4. Sitz nach einem der Ansprüche 1 bis 3, **dadurch gekennzeichnet, daß** die Datenübertragung zwischen dem Datenspeicher (32) und dem Lesegerät (50) drahtlos erfolgt, insbesondere daß die Daten drahtlos aus dem Datenspeicher (32) auslesbar und drahtlos in den Datenspeicher (32) einschreibbar sind.

5. Sitz nach einem der Ansprüche 1 bis 4, **dadurch gekennzeichnet, daß** die Datenübertragung zwischen dem Datenspeicher (32) und dem Lesegerät (50) unter Verwendung einer Steckverbindung erfolgt, drahtgebunden oder drahtlos, insbesondere mit einer Magnethalterung oder Klemmhalterung.

6. Sitz nach einem der Ansprüche 1 bis 5, **dadurch gekennzeichnet, daß** der Datenspeicher (32) nach dem Transponderprinzip arbeitet und auf eine entsprechende Stimulation des Lesegeräts (50) Daten aus dem Datenspeicher (32) auslesbar sind oder Daten in den Datenspeicher (32) einschreibbar sind.

7. Sitz nach einem der Ansprüche 1 bis 6, **dadurch gekennzeichnet, daß** die für den Betrieb des Datenspeichers (32) erforderliche Energie von dem Lesegerät (50) auf den Datenspeicher (32) oder auf eine dem Datenspeicher (32) zugeordnete und mit dem Datenspeicher (32) verbundene Empfangseinheit übertragbar ist.

8. Sitz nach einem der Ansprüche 1 bis 7, **dadurch gekennzeichnet, daß** an dem Sitz im Bereich des Datenspeichers (32) eine Einrichtung (66) zum Positionieren des Lesegeräts (50) vorgesehen ist, insbesondere eine mit zugeordneten Positionierungsmitteln (68) am Lesegerät (50) zusammenwirkende Rasteinrichtung.

9. Sitz nach Anspruch 8, **dadurch gekennzeichnet, daß** die Positioniereinrichtung (66) oder die Positionierungsmittel (68) einen Magneten aufweist, durch den das Lesegerät (50) in eine vorgebbare Position in Bezug auf den Datenspeicher (32) bringbar ist.

10. System aufweisend einen Sitz nach einem der Ansprüche 1 bis 9 sowie ein Lesegerät (50) für die Datenübertragung mit einem an dem Sitz angeordneten Datenspeicher (32), **dadurch gekennzeichnet, daß** das Lesegerät (32) Datenübertragungsmittel (62) zum Auslesen der individuellen, hinsichtlich der Lebensdauer oder der Zertifizierung des jeweiligen Sitzes und/oder einzelner Sitzkomponenten relevanten Daten aufweist, und daß das Lesegerät (50) Speichermittel aufweist zum Zwischenspeichern der aus dem Datenspeicher (32) ausgelesenen und/oder der in den Datenspeicher (32) einzuschreibenden Daten.

11. System nach Anspruch 10, **dadurch gekennzeichnet, daß** das Lesegerät (50) eine Anzeigeeinrichtung (54) aufweist zum Anzeigen der aus dem Datenspeicher (32) ausgelesenen und/oder der in den Datenspeicher (32) einzuschreibenden Daten.

12. System nach Anspruch 10 oder 11, **dadurch gekennzeichnet, daß** das Lesegerät (50) Positionierungsmittel (68) aufweist zum Positionieren des Lesegeräts (50), insbesondere eines Lesekopfes, in Bezug auf den Datenspeicher (32) zum Zwecke der Datenübertragung.

13. System nach einem der Ansprüche 10 bis 12, **dadurch gekennzeichnet, daß** die zwischengespeicherten Daten mittels einer standardisierten Schnittstelle (58) auf einen weiterverarbeitenden Rechner übertragbar sind.

## Claims

1. Seat, particularly a vehicle seat, preferably an aircraft seat (10, 30), having at least one seat component, such as a seat part (20), a backrest (22) or an armrest (26), wherein the seat, in the as-delivered condition, complies with prescribed approval regulations and is accordingly certified, with at least one seat component having a data storage unit (32) fixedly arranged on it which can be read electronically by an external reader (50), **characterized in that** the data storage unit (32) stores individual data which are relevant to the life or the certification of the respective seat and/or of individual seat components, **in that** the data storage unit (32) has a read-only memory area (34) in which data have already been stored by the factory in the as-delivered condition of the seat, and **in that** the data storage unit (32) has a read/write memory area (36) in which data can be written and read during the life of the seat.

2. Seat according to Claim 1, **characterized in that** the data in the data storage unit (32) are stored permanently, in particular are non-erasable and non-overwritable.

3. Seat according to one of Claims 1 and 2,
**characterized in that** the data storage unit (32) has a unique, unalterable and electronically readable identification number.

4. Seat according to one of Claims 1 to 3,
**characterized in that** the data transmission between the data storage unit (32) and the reader (50) takes place wirelessly, particularly **in that** the data can be read from the data storage unit (32) wirelessly and can be written to the data storage unit (32) wirelessly.

5. Seat according to one of Claims 1 to 4,
**characterized in that** the data transmission between the data storage unit (32) and the reader (50) takes place using a plug connection, by wire or wirelessly, particularly with magnet mounting or clamp mounting.

6. Seat according to one of Claims 1 to 5,
**characterized in that** the data storage unit (32) operates on the basis of the transponder principle, and appropriate stimulation of the reader (50) can prompt data to be read from the data storage unit (32) or data to be written to the data storage unit (32).

7. Seat according to one of Claims 1 to 6, **characterized in that** the power required for operation of the data storage unit (32) can be transmitted from the reader (50) to the data storage unit (32) or to a reception unit which is associated with the data storage unit (32) and connected to the data storage unit (32).

8. Seat according to one of Claims 1 to 7,
**characterized in that** the seat has a device (66) provided on it in the region of the data storage unit (32) for positioning the reader (50), particularly a latching device interacting with associated positioning means (68) on the reader (50).

9. Seat according to Claim 8, **characterized in that** the positioning device (66) or the positioning means (68) has/have a magnet which can put the reader (50) into a prescribable position relative to the data storage unit (32).

10. System having a seat according to one of Claims 1 to 9 and a reader (50) for the data transmission with a data storage unit (32) arranged on the seat, **characterized in that** the reader (32) has data transmission means (62) for reading the individual data which are relevant to the life or the certification of the respective seat and/or of individual seat components, and **in that** the reader (50) has memory means for buffer-storing the data which are read from the data storage unit (32) and/or the data which are to be written to the data storage unit (32).

11. System according to Claim 10, **characterized in that** the reader (50) has an indicator device (54) for indicating the data which are read from the data storage unit (32) and/or the data which are to be written to the data storage unit (32).

12. System according to Claim 10 or 11, **characterized in that** the reader (50) has positioning means (68) for positioning the reader (50), particularly a read head, relative to the data storage unit (32) for the purpose of data transmission.

13. System according to one of Claims 10 to 12,
**characterized in that** the buffer-stored data can be transmitted to a further-processing computer using a standardized interface (58).

## Revendications

1. Siège, en particulier siège de véhicule, de préférence siège pour passager aérien (10, 30), comportant au moins un composant de siège, comme par exemple une partie d'assise (20), un dossier (22) ou un accoudoir (26), dans lequel le siège, dans son état de livraison, respecte des prescriptions d'homologation prédéterminées et est certifié de manière correspondante, dans lequel une mémoire de données (32) est fixée à au moins un composant de siège et est lisible par voie électronique au moyen d'un lecteur extérieur (50), **caractérisé en ce que** des données individuelles, importantes en ce qui concerne la durée de vie ou la certification du siège respectif et/ou des composants individuels du siège, sont stockées dans la mémoire de données (32), **en ce que** la mémoire de données (32) présente une zone de mémoire en lecture seule (34) dans laquelle des données sont déjà stockées en usine dans l'état de livraison du siège, et **en ce que** la mémoire de données (32) présente une zone de mémoire en écriture et lecture (36), dans laquelle des données peuvent être écrites et lues pendant la durée de vie du siège.

2. Siège selon la revendication 1, **caractérisé en ce que** les données sont stockées durablement dans la mémoire de données (32), en particulier ne peuvent pas être effacées ni écrasées.

3. Siège selon l'une quelconque des revendications 1 ou 2, **caractérisé en ce que** la mémoire de données (32) possède un numéro d'identification unique, inaltérable et lisible électroniquement.

4. Siège selon l'une quelconque des revendications 1 à 3, **caractérisé en ce que** la transmission de données entre la mémoire de données (32) et le lecteur (50) est effectuée sans fil, en particulier **en ce que** les données sont lisibles sans fil à partir de la mémoire de données (32) et sont inscriptibles sans fil dans la mémoire de données (32).

5. Siège selon l'une quelconque des revendications 1 à 4, **caractérisé en ce que** la transmission de données entre la mémoire de données (32) et le lecteur (50) est effectuée en utilisant une connexion à fiches, avec fil ou sans fil, en particulier avec un support à aimant ou un support à bornes.

6. Siège selon l'une quelconque des revendications 1 à 5, **caractérisé en ce que** la mémoire de données (32) opère selon le principe du transpondeur et des données sont lisibles à partir de la mémoire de données (32) ou sont inscriptibles dans la mémoire de données (32) suite à une stimulation correspondante du lecteur (50).

7. Siège selon l'une quelconque des revendications 1 à 6, **caractérisé en ce que** l'énergie nécessaire pour le fonctionnement de la mémoire de données (32) peut être transmise du lecteur (50) à la mémoire de données (32) ou à une unité de réception associée à la mémoire de données (32) et reliée à la mémoire de données (32).

8. Siège selon l'une quelconque des revendications 1 à 7, **caractérisé en ce qu'**il est prévu sur le siège, dans la région de la mémoire de données (32), un dispositif (66) pour positionner le lecteur (50), en particulier un dispositif d'accrochage coopérant avec des moyens de positionnement associés (68) sur le lecteur (50).

9. Siège selon la revendication 8, **caractérisé en ce que** le dispositif de positionnement (66) ou les moyens de positionnement (68) comprennent un aimant, au moyen duquel le lecteur (50) peut être placé dans une position prédéterminable par rapport à la mémoire de données (32).

10. Système comportant un siège selon l'une quelconque des revendications 1 à 9, ainsi qu'un lecteur (50) pour la transmission de données avec une mémoire de données (32) disposée sur le siège, **caractérisé en ce que** le lecteur (50) comprend des moyens de transmission de données (62) pour lire les données individuelles, importantes en ce qui concerne la durée de vie ou la certification du siège respectif et/ou des composants individuels du siège, et **en ce que** le lecteur (50) comprend des moyens de mémoire pour le stockage temporaire des données lues dans la mémoire de données (32) et/ou à écrire dans la mémoire de données (32).

11. Système selon la revendication 10, **caractérisé en ce que** le lecteur (50) comporte un dispositif d'affichage (54) permettant d'afficher les données lues dans la mémoire de données (32) et/ou les données à écrire dans la mémoire de données (32).

12. Système selon la revendication 10 ou 11, **caractérisé en ce que** le lecteur (50) comporte des moyens de positionnement (68) permettant de positionner le lecteur (50), en particulier une tête de lecture, par rapport à la mémoire de données (32) en vue de la transmission de données.

13. Système selon l'une quelconque des revendications 10 à 12, **caractérisé en ce que** les données stockées temporairement peuvent être transmises au moyen d'une interface normalisée (58) à un ordinateur de traitement.
